# FASCICULE DE BREVET EUROPEEN

(11) **EP 1 470 882 B1**
(45) Date de publication et mention de la délivrance du brevet: **02.06.2010**
(21) Numéro de dépôt: 04290833.5
(22) Date de dépôt: 30.03.2004
(51) Int. Cl.: B23D 51/16, B23Q 11/00, F16D 43/21, F16D 7/02, F16D 7/10, B25F 5/00, B24B 23/02

(54) **Machine portative sécurisée pour outillage motorisé**
Handwerkzeugmachine mit Sicherung
Secured power tool

(30) Priorité: 24.04.2003 FR 0305021
(43) Date de publication de la demande: 27.10.2004
(73) Titulaire: Maret, Jean-Claude, 91380 Chilly-Mazarin (FR)
(72) Inventeur: Maret, Jean-Claude, 91380 Chilly-Mazarin (FR)
(74) Mandataire: Célanie, Christian

(56) Documents cités:
- GB-A- 370 977
- GB-A- 1 095 068
- GB-A- 2 084 268
- US-B1- 6 415 875
- DATABASE WPI Section PQ, Week 198250 Derwent Publications Ltd., London, GB; Class Q63, AN 1982-B1275J XP002286358 & SU 901 681 A (ZABLOTSKII V M), 30 janvier 1982 (1982-01-30)

## Description

L'invention concerne une machine portative équipée d'un moyen de sécurité en cas de blocage de l'outil par un utilisateur. Un exemple d'une telle machine selon le préambule de la revendication 1 est publié dans le brevet GB-A-1095068.

Il est bien connu dans l'art antérieur qu'un embrayage peut être interposé entre un arbre menant et un arbre mené permettant la transmission ou l'arrêt de la transmission d'un mouvement de rotation depuis un moteur jusqu'à un outil. De tels dispositifs permettent de contrôler le mouvement rotatif de l'outil, tout en maintenant une rotation constante du moteur. L'embrayage/débrayage s'effectue classiquement par le déplacement d'un moyen d'entraînement qui vient temporairement, lorsqu'il est commandé, solidariser l'arbre d'entrée avec l'arbre de sortie afin que le premier transmette son mouvement au second.

On peut citer de tels embrayages construits sur des systèmes à crabot, le crabot élément réalisant le moyen d'entraînement et étant mobile entre une position craboté où les deux arbres sont solidarisés et une position libre où les deux arbres sont désolidarisés.

On peut trouver encore de tels embrayages construits sur un système à friction. Dans ce cas, le premier arbre présente une première surface. Le second arbre présente une seconde surface en regard de la première. Le moyen d'entraînement est ici la seconde surface qui peut se déplacer entre une position libre et une position en contact avec la première surface. Ce contact assure, au moyen de la friction, l'accouplement des deux surfaces entraînant la solidarisation des deux arbres et la transmission de mouvement. De tels systèmes d'embrayages ont en commun de nécessiter une action, par exemple d'un opérateur, pour embrayer ou pour débrayer. En cas de surcharge brutale sur l'arbre de sortie, comme il peut s'en produire en cas de blocage de l'outil, l'opérateur n'est pas assez rapide pour manoeuvrer un tel embrayage.

Le brevet US-4669590 divulgue un système d'embrayage présentant un tambour solidaire de l'arbre menant. Les moyens d'entraînement sont des mâchoires, solidaires de l'arbre mené. L'opérateur doit agir sur des moyens pour provoquer le déplacement des mâchoires en appui contre le tambour afin d'embrayer les organes menant et mené. A contrario, l'opérateur doit manoeuvrer des moyens pour déplacer les mâchoires en sens inverse afin de désolidariser les deux arbres.

On connaît des embrayages à effet centrifuge, où le moyen d'entraînement est réalisé par un corps inertiel, lié à l'arbre menant, qui sous l'effet de la rotation de ce dernier et de l'accélération centrifuge vient en contact avec l'arbre mené. L'embrayage est ainsi automatiquement réalisé dès que la vitesse de l'arbre menant dépasse un certain seuil. Un tel système n'est cependant pas automatique lors du débrayage et le blocage de l'outil ne débraye pas les deux arbres.

On a tenté d'incorporer des limiteurs de couples. Il est ainsi connu des dispositifs permettant, au-delà d'un certain couple d'interrompre la transmission de mouvement. Le principe de ces dispositifs est de se désaccoupler automatiquement dès qu'un couple seuil est atteint. De tels dispositifs sont, par exemple, réalisés par un entraînement à friction, les deux pièces se désolidarisant et frottant l'une sur l'autre au-delà d'un certain seuil de couple apparaissant entre elles. Un tel dispositif présente l'inconvénient de dissiper, essentiellement en chaleur, toute l'énergie supplémentaire et de provoquer une usure excessive des pièces de friction qui continuent de travailler tant que le dispositif est sollicité, c'est à dire tant le moteur tourne et que le couple seuil est dépassé.

Un autre dispositif connu consiste à entraîner l'arbre mené par l'arbre menant au moyen d'un contact entre deux surfaces biaises complémentaires et maintenues l'une contre l'autre par un moyen de rappel taré à un certain seuil. Au-delà d'un certain couple à transmettre, le seuil du moyen de rappel est dépassé et les deux surfaces biaisées ne restent plus en contact, mais glissent l'une sur l'autre et n'assure plus la transmission de mouvement. Un tel dispositif présente l'inconvénient de dissiper l'énergie en bruit et/ou en chaleur. Le dispositif reste actif tant que le couple est maintenu et conduit à une usure importante.

Un autre inconvénient commun à tous les limiteurs de couples, de par leur caractéristique essentielle, est que le débrayage est temporaire. Dès que le couple entre les deux arbres diminue pour redevenir inférieur à la valeur de débrayage, le dispositif embraye à nouveau et l'arbre mené est de nouveau entraîné par l'arbre menant. Ceci peut s'avérer extrêmement dangereux pour l'utilisateur. De plus les limiteurs sont peu efficaces en cas de blocage. Ces dispositifs sont généralement fragiles et se détériorent rapidement.

Le brevet US-5653509 divulgue un dispositif dans lequel des éléments inertiels radiaux solidaires de l'arbre mené réalisent les moyens d'entraînement. Cependant, le mouvement uniquement radial des éléments inertiels peut conduire à un blocage dans leur logement tant lors de la phase d'embrayage, que lors de la phase de débrayage automatique intervenant en cas de blocage de l'outil.

Aucune machine portative de l'art antérieur ne pose le problème du débrayage de l'arbre mené lorsque les deux arbres sont décalés angulairement comme c'est par exemple le cas des meuleuses. Dans ce type de machine les deux axes sont disposés de manière perpendiculaire ou orthogonale.

Le problème que résout l'invention est de réaliser automatiquement un débrayage entre les deux arbres angulairement décalés en cas de blocage de l'outil, par exemple dans la pièce en cours de travail. Ceci revient à désaccoupler les deux arbres dès qu'un couple résistant apparaît au niveau de l'outil dépassant un certain seuil ou dès que la vitesse de l'outil devient inférieure à un certain seuil.

La présente invention répond à ces différents problèmes en proposant un dispositif combinant les avantages d'un embrayage et d'un limiteur de couple sans en présenter les inconvénients. Plus précisément, l'invention prévoit un embrayage qui s'embraye automatiquement et selon un mouvement circulaire, lorsque le moteur tourne, se débraye très rapidement et automatiquement dès que l'outil se bloque, en désolidarisant complètement les deux arbres, sans pouvoir embrayer à nouveau tant que l'outil est arrêté/bloqué.

L'invention a donc pour objet une machine portative sécurisée pour outillage motorisé selon la revendication 1.

Selon une caractéristique, la transmission du couple d'entraînement est assurée par le contact par friction entre l'embrayage et la cloche.

Selon une autre caractéristique, les surfaces de contact entre l'embrayage et la cloche sont recouvertes d'un matériau de friction.

Selon encore une autre caractéristique, l'embrayage est appliqué contre la cloche par un moyen de rappel et/ou la force centrifuge.

Selon encore une autre caractéristique, caractérisé en ce que le moyen de rappel est un ressort hélicoïdal ou une lame ressort.

Selon encore une autre caractéristique, le moyen de rappel est un élastomère adhérisé entre l'arbre mené et l'embrayage.

Selon une autre caractéristique, l'embrayage combine des moyens d'entraînement présentant une surface de révolution coopérant avec une surface de révolution de la cloche par friction, ladite surface étant appliquée contre ladite surface de la cloche par un moyen ressort, avec des moyens d'entraînement présentant une surface de normale non radiale coopérant avec une surface de normale non radiale de la cloche par emboîtement, de profil symétrique ou non, le moyen d'entraînement étant rappelé vers l'arbre mené par un moyen de rappel, alternativement et équitablement répartis sur la périphérie de l'arbre mené.

Selon un mode de réalisation, lesdites surfaces présentent deux profils complémentaires, de normale non radiale, tels que l'emboîtement des profils de ces deux surfaces permette la transmission du couple d'entraînement.

Selon encore une réalisation, le patin de friction est constitué par un élastomère et un ensemble de billes.

L'invention trouve une application toute particulière aux machines portatives constituées par des outillages portatifs afin d'interrompre l'entraînement dudit outil lorsque ce dernier rencontre une résistance correspondant, par exemple, à un blocage de l'outil dans la pièce travaillée.

Un avantage de la machine selon l'invention est de débrayer automatiquement en cas de blocage de l'outil.

Un autre avantage de la machine selon l'invention est de supprimer une contre réaction ou rejet, se produisant au niveau de l'arbre moteur et de l'utilisateur, lors d'un blocage de l'outil.

Un autre avantage est de pouvoir continuer à fonctionner, une fois l'outil bloqué, sans produire d'usure ou de surchauffe.

Un autre avantage est de présenter un auto-blocage des moyens d'entraînement. Ceci constitue un double avantage. D'une part, la force centrifuge de l'embrayage se trouve renforcée et d'autre part, lors de l'arrêt rapide de la rotation de l'arbre moteur, le dispositif reste embrayé, réalisant un freinage plus efficace de l'outil.

Un autre avantage, lié au déploiement selon un mouvement circulaire, est de présenter une tolérance aux mauvais fonctionnements nettement améliorée relativement à des moyens d'entraînement se déplacent radialement.

Un autre avantage du dispositif selon l'invention est de permettre un démarrage progressif de l'outil.

Un autre avantage du dispositif selon l'invention, de par la présence des moyens ressort et des moyens de rappel, est de permettre de régler, en modifiant les raideurs ou tarages desdits moyens, les valeurs seuils d'embrayage ou de débrayage.

D'autres caractéristiques, détails et avantages de l'invention ressortiront plus clairement de la description détaillée donnée ci-après à titre indicatif en relation avec des dessins sur lesquels :
- la figure 1 présente en coupe longitudinale une machine portative équipée d'un embrayage selon l'invention, l'embrayage est représenté de profil,
- la figure 2 présente une vue de dessus en coupe du dispositif selon l'invention, selon un premier mode de réalisation,
- la figure 3 présente des courbes comparatives des couples en fonction du temps,
- la figure 4 présente une vue de dessus en coupe du dispositif selon l'invention, selon une variante de fixation des moyens d'entraînement,
- la figure 5 présente une vue de dessus en coupe du dispositif selon l'invention, selon une autre variante de fixation des moyens d'entraînement,
- la figure 6 présente une vue de dessus en coupe du dispositif selon l'invention, selon un second mode de réalisation,
- la figure 7 présente une vue de dessus en coupe du dispositif selon l'invention, selon une variante du second mode de réalisation,
- les figures 8a et 8b présentent une vue de dessus en coupe du dispositif selon l'invention, selon une variante combinant les premier et second modes de réalisation, respectivement en position débrayée, et en position embrayée
- les figures 9a et 9b représentent en coupe une variante de réalisation de la machine portative,
- les figures 10a et 10b représentent en coupe une variante de réalisation de la machine portative, et
- les figures 11a et 11b représentent en coupe une variante de réalisation de la machine portative.

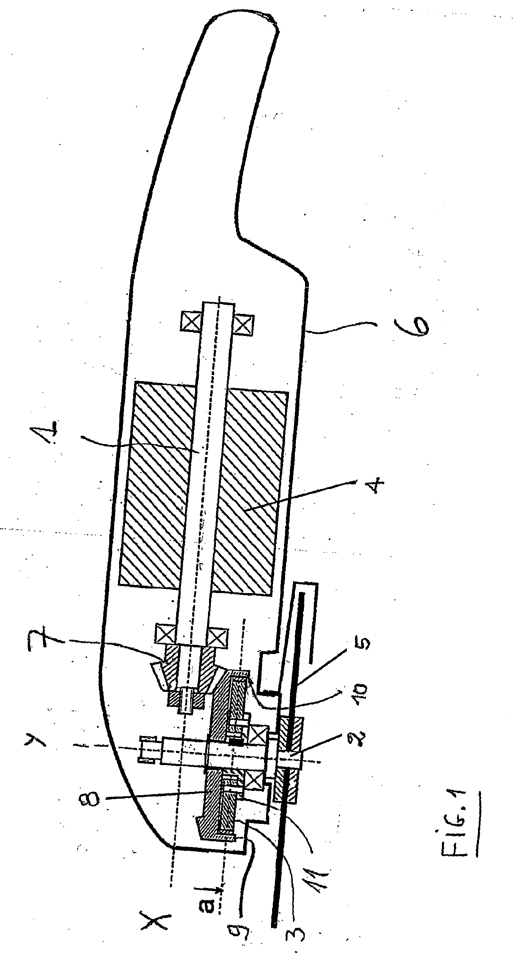

Sur la figure 1, on a représenté une machine portative constituée ici par un outillage de type meuleuse angulaire. La particularité de cette machine réside dans le fait que les arbres menant 1 et mené 2 ne sont pas alignés et présentent un décalage angulaire à savoir perpendiculaire ou orthogonale. L'arbre menant 1 est accouplé à un moteur 4. Cet accouplement peut être direct par tout moyen connu (cannelures, clavetage,...) ou s'effectuer par l'intermédiaire d'un organe de transmission. Cet accouplement est permanent. Le moteur peut être de tout type : électrique, hydraulique, thermique, ...

L'outil 5, ici un disque, est solidaire de l'arbre mené 2 et entraîné en rotation par lui par l'intermédiaire d'un moyen d'entraînement 3 ou embrayage. Le corps 6 de l'outillage est dans une configuration parallèle à l'outil 5 et l'arbre menant 1 comprend une transmission par engrenage conique 7 engrenant sur une cloche 8 présentant une jupe 9. La cloche 8 constitue le second pignon conique coopérant avec le pignon conique 7 de l'arbre menant 1.

La jupe 9 délimité une surface interne 10 centrée sur l'arbre mené 2. Cette surface 10 est avantageusement cylindrique interne, afin de présenter la plus grande opposition à un mouvement s'éloignant le l'axe Y de l'arbre mené 2. Alternativement, cette surface 10 peut aussi, par exemple, être conique ou encore présenter toute forme orientée vers l'arbre 2. Cette surface 10 peut être ou non de révolution. La topologie de cette surface 10 est quelconque à la seule condition que sa normale sortante soit globalement orientée vers l'arbre 2.

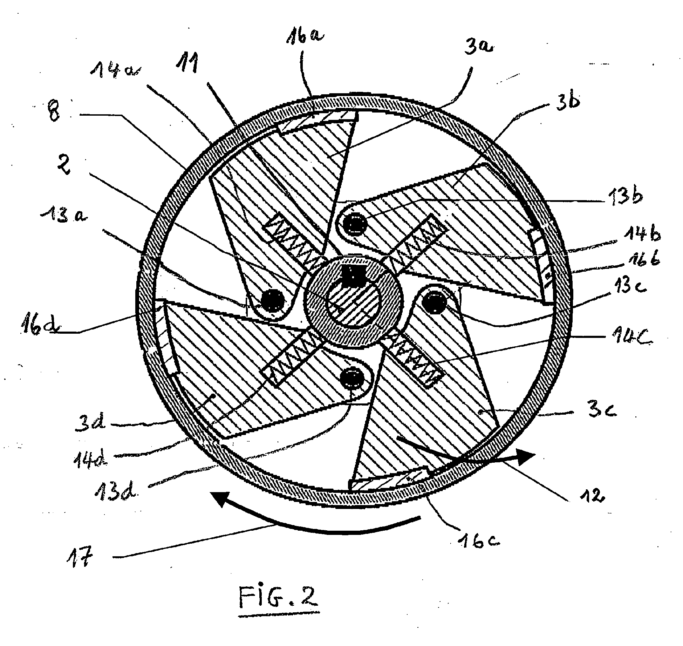

L'embrayage 3 comprend un ou plusieurs moyens d'entraînement 3a-3d décrits en relation avec la figure 2. Le nombre de ces moyens 3 est quelconque pourvu qu'ils soient intégrés dans la cloche 8. Le fait de disposer plusieurs moyens d'entraînement 3 permet d'améliorer le fonctionnement de la machine en répartissant les efforts sur la périphérie. Un nombre de moyens d'entraînement 3 au moins égal à deux permet un meilleur équilibrage en évitant les balourds. Les figures présentent généralement des réalisations avec quatre moyens d'entraînement 3. Ces moyens d'entraînement 3 sont liés à l'arbre mené 2 à l'aide d'un moyeu 11 afin d'être entraînés en rotation par ce dernier. Les moyens d'entraînement 3 conservent une mobilité, permettant leur déploiement sous l'effet de l'accélération centrifuge. On voit donc que selon l'invention on utilise avantageusement l'espace interne délimité par la cloche 8 pour loger l'embrayage 3 qui coopère avec elle pour réaliser l'entraînement et la libération de l'outil 5 par son axe d'entraînement 2.

La figure 2 présente une coupe AA en vue de dessus de l'embrayage équipant la machine objet de la présente invention et illustre une caractéristique importante de l'invention. Les moyens d'entraînement 3a-3d ici au nombre de quatre sont liés à l'arbre mené 2 de manière à ce que leur déploiement s'effectue selon un mouvement circulaire figuré par la flèche 12. Cette figure 2 illustre le principe de fonctionnement de l'invention. Du dispositif mené, seule la cloche 8 est ici apparente. Les moyens d'entraînement 3 sont dans ce mode de réalisation articulés par l'intermédiaire d'axes 13a-13d parallèles à l'arbre mené 2 et solidaires de ce même arbre mené 2 comme indiqué ci-dessus par l'intermédiaire du moyeu 11 à l'aide d'une clavette.

Afin de produire un couple de frottement minimum nécessaire à l'entraînement initial en rotation de l'arbre mené 2, les moyens d'entraînement 3 sont avantageusement appliqués contre la cloche 8 chacun par un moyen ressort 14a-14d. Le choix de ce moyen ressort et de son tarage, réalisé par tout moyen connu de l'homme de l'art, permet un réglage dudit couple C1 de frottement résiduel initial.

La disposition de chaque moyen ressort 14 doit être telle qu'il puisse exercer un effort relativement au centre de rotation de chaque moyen d'entraînement 3 ici l'axe 13. Cet effort s'exerce de manière à déplacer le moyen d'entraînement 3 dans le sens de son déploiement, selon la rotation 12.

Chaque moyen d'entraînement est muni au niveau de sa surface de contact avec la cloche 8 de patin 16a-16d. Au repos, les deux arbres 1, 2 sont arrêtés. Lors de son utilisation, la machine portative est mise fonctionnement par rotation de l'arbre d'entrée 1 grâce au moteur 4. L'arbre d'entrée 1 tourne seul et l'arbre de sortie 2 reste dans un premier temps immobile. Des frottements résiduels, essentiellement secs et donc indépendants de la vitesse relative des deux arbres 1, 2 existent entre les deux arbres 1 et 2. Ces frottements présents entre les moyens d'entraînement 3 et la cloche 8 au niveau des surfaces en regard de ceux-ci, permettent la transmission d'un couple faible. Dans cette première phase de démarrage de l'outillage, l'outil 5 n'est pas en prise sur la pièce à usiner et le couple de réaction de l'outil 5 sur le moteur 4 reste négligeable. Le couple dû aux frottements, même faible, est suffisant pour permettre une mise en rotation de l'arbre de sortie 2. Il est avantageux de noter que cette mise en mouvement ne peut s'effectuer que si l'outil 5 est libre d'effort. De plus, cette mise en mouvement s'effectue nécessairement très progressivement. La vitesse de l'arbre mené 2, et donc des moyens d'entraînement 3 solidaires, augmente ainsi jusqu'à ce que l'accélération centrifuge soit suffisante pour provoquer le déploiement de ces moyens d'entraînement 3. Ce déploiement s'effectue selon une trajectoire circulaire 17 et conduit ces moyens d'entraînement 3 en contact au niveau de leur surface en regard avec la cloche 8 au niveau de la face interne de la jupe 9. Ce contact permet la transmission d'un couple d'entraînement plus important que le couple initial dû aux frottements résiduels. Une fois établi, le contact est auto-maintenu et se renforce avec l'augmentation de la vitesse de l'arbre mené 2 qui en résulte. Le couple transmis augmente en conséquence jusqu'à atteindre les capacités maximales de l'outillage. L'outil 5 peut être utilisé au travail sur une pièce à usiner. Le dimensionnement des moyens 3 permet de fixer par exemple à 2000 tours, le déclenchement de l'armement de l'outil.

Si, ce qui est fréquent avec de tels outillages, un blocage de l'outil 5 se produit par un coincement dudit outil 5 dans la pièce qu'il usine ou du fait de toute autre résistance anormale, l'outil 5 est brutalement arrêté. Ceci se produit, par exemple, lorsqu'un disque de coupe vient à se coincer dans une entaille devenue trop profonde ou se refermant suite à une flexion de la pièce. Ceci peut aussi se produire pour une tronçonneuse à chaîne qui est coincée par la déformation de l'entaille qu'elle réalise ou encore par la présence d'un élément résistant ou non sécable, par exemple un clou, présent dans le bois et qui bloquant une dent arrête la rotation de la chaîne. Un tel arrêt brutal de l'outil 5, avec un outillage de l'art antérieur où le moteur 4 reste embrayé sur l'outil 5, produit un violent couple en retour qui se répercute sur le moteur 4 et sur le corps de l'outillage, jusqu'à l'opérateur. Ce violent contrecoup, ou rejet, peut être très dangereux en ce qu'il risque de provoquer un mouvement inattendu de l'outillage. Particulièrement, dans le cas d'un outillage portatif, ce rejet peut conduire à faire lâcher la prise en main de l'outillage par l'opérateur, avec les risques de blessures qui peuvent en résulter.

Suivant l'invention, suite à un blocage, l'outil 5 est stoppé et l'accélération centrifuge qui provoque le déploiement des moyens d'entraînement 3 s'annule très rapidement supprimant ainsi le contact soutenu qui permettait la transmission du couple d'entraînement de l'arbre mené 2. Les arbres menant 1 et mené 2 ne sont plus accouplés. Il ne se produit donc aucun rejet et l'utilisateur n'est pas perturbé par cet arrêt. Le moteur 4 peut continuer à tourner car il ne transmet plus qu'un couple très faible à l'arbre mené 2. Cette situation peut se poursuivre. Aucune pièce ne subit d'usure et le dispositif ne peut ré-embrayer tant que l'outil 5 est bloqué. Seul persiste le couple résiduel de frottement, tel qu'au démarrage, qui est pratiquement inopérant ou du moins négligeable comparé au couple d'encastrement de l'outil 5 ayant provoqué son blocage. On voit donc tout l'intérêt de l'invention qui procure une très grande sécurité à l'utilisateur.

Bien entendu, une fois l'outil 5 débloqué, le ré-embrayage s'effectue progressivement sans les dangers liés à une brusque reprise de la transmission.

Les moyens d'entraînement 3 comprennent des organes ou masselottes se déployant sous l'effet de l'accélération centrifuge. Ces masselottes, selon une caractéristique importante de l'invention, se déploient selon un mouvement circulaire 12. L'art antérieur enseigne des moyens d'entraînement se déplaçant radialement. Un tel mouvement radial, perpendiculaire au mouvement de rotation, présente un risque important de blocage des moyens d'entraînement dans leur logement. Une telle configuration radiale ne permet pas de faire varier la force d'appui des masselottes sur la cloche, ni les tailles des surfaces en regard des éléments équivalents, cloche et moyens d'entraînement.

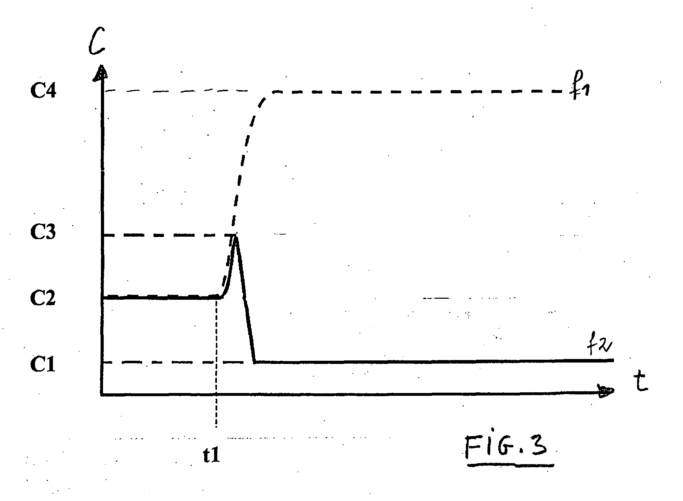

La courbe de la figure 3 illustre le principe de fonctionnement de sécurité de l'invention. Sur ce graphique est présenté le couple C en ordonnées, en fonction du temps t en abscisse. Une première courbe f1 en trait pointillé représente le comportement d'un outillage non équipé d'un embrayage de sécurité. Dans le cas d'un tel outillage, la courbe de couple décrit un premier plateau correspondant à une phase de travail normal ou l'outillage développe un couple C2. A compter d'un instant t1, correspondant à un blocage de l'outil, le couple augmente très rapidement. Ce couple n'est pas limité et peut ainsi augmenter jusqu'à atteindre un second plateau correspondant au couple maximal C4 que peut délivrer le moteur 4 et qui peut être très important.

Une seconde courbe f2 en trait plein représente le comportement d'un outillage équipé d'un embrayage selon l'invention. La courbe décrit un premier plateau correspondant à une phase de travail normal où l'outillage développe un couple C2. A compter de l'instant t1, correspondant à un blocage de l'outil, le couple augmente très rapidement. Le blocage de l'outil est très rapidement détecté par l'embrayage selon l'invention. L'interruption de l'accélération centrifuge entraîne un retour des moyens d'entraînement 3 vers l'arbre mené 2 et désaccouple/débraye l'arbre menant 1 de l'arbre mené 2. Le couple augmente jusqu'à atteindre une limite haute C3, qui dépend du temps de réaction de l'embrayage. Cette limite C3 est cependant bien plus faible que la limite C4 atteinte en l'absence d'un embrayage de sécurité. Très rapidement, le couple chute au niveau du couple C1. Cette limite basse C1 du couple correspond aux frottements résiduels qui permettent par ailleurs le démarrage du dispositif.

Le sens de rotation 12 de déploiement des moyens d'entraînement 3 peut être quelconque. Le fonctionnement inertiel de l'embrayage est le même que ce mouvement s'effectue dans le même sens ou de sens contraire au mouvement circulaire 17 de l'arbre menant 1.

Cependant, avantageusement, les moyens d'entraînement 3 sont conçus de façon que ce mouvement circulaire 12 s'effectue en sens opposé du mouvement de rotation 17 nominal d'entraînement de l'arbre menant 1. Dans le mode de réalisation illustré sur la figure 3, les masselottes des moyens d'entraînement 3 sont montées libres en rotation autour d'axes 13 coaxiaux et solidaires de l'arbre mené 2. La mise en rotation de l'arbre mené 2, dans le sens de rotation 12 induit par l'arbre menant 1, crée une accélération centrifuge qui produit un mouvement circulaire 12 de chaque masselotte autour de l'arbre 13 de sens opposé au sens de rotation 12. Une telle disposition présente l'avantage de produire, au niveau du contact entre les surfaces en regard de la jupe 9 et du moyen 3, par un effet d'arc-boutement, un auto-blocage qui vient renforcer la liaison entre les moyens d'entraînement 3 et la cloche 8. Cet effet d'auto-blocage se renforce encore davantage lorsque le couple entre l'arbre menant 1 et l'arbre mené 2 s'inverse. Ainsi, lors d'un arrêt du moteur 4, celui-ci devient frein. L'auto-blocage assure alors avantageusement un embrayage entre les deux arbres 1 et 2 et assure un arrêt rapide de l'outil 5. L'outil 5 ne risque pas non plus de tourner en roue libre, ce qui pourrait être dangereux. Avantageusement encore, la force de cet effet d'auto-blocage et plus généralement la force d'appui centrifuge, est réglable en modifiant le bras de levier, c'est-à-dire le décalage angulaire entre le centre de rotation du moyen d'entraînement 3, ici l'axe 13 et le centre de gravité dudit moyen d'entraînement 3. La force de l'effet d'auto-blocage est proportionnelle à ce décalage angulaire.

Selon un mode de réalisation de l'invention, les surfaces en regard de la cloche 8 et du moyen 3 sont de révolution afin de faciliter la rotation relative d'une surface par rapport à l'autre. La possibilité de transmission d'un couple au niveau d'un contact entre ces deux surfaces est alors assurée par friction des deux surfaces l'une sur l'autre.

Afin d'adapter la qualité de cette friction, il est possible de modifier l'état de surface de l'une ou des deux de ces surfaces. Ceci peut se faire directement en usinant les surfaces elles-mêmes. Compte tenu de la valeur importante du coefficient de frottement souhaitable, il est avantageux de recouvrir l'une, l'autre ou les deux surfaces d'un matériau de friction 16. Ce matériau est avantageusement une garniture, par exemple de celles utilisées pour la réalisation des freins. Elle est fixée par tout moyen connu, par exemple par collage à chaque moyen 3.

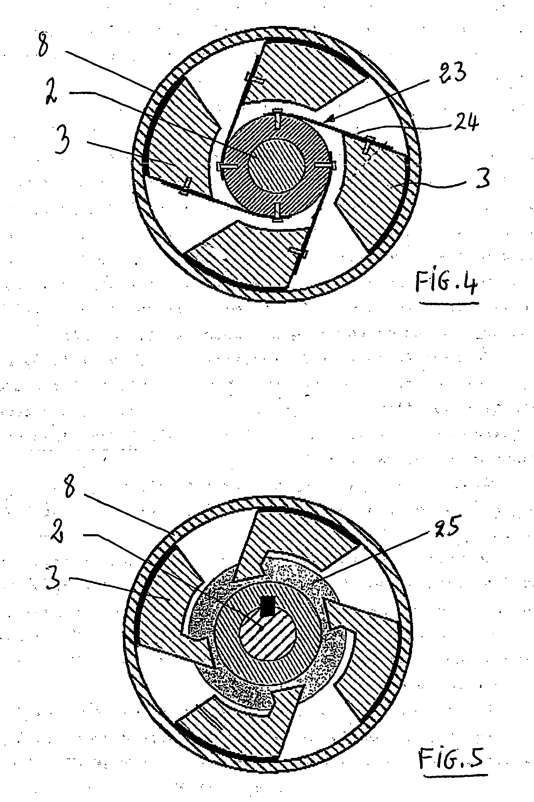

Un autre mode de réalisation permettant le déploiement circulaire consiste à utiliser comme l'illustrent les figures 4 et 5, un moyen élastique 23. Il est remarquable que ce moyen élastique 23 d'une part autorise le mouvement circulaire de déploiement du moyen d'entraînement 3, et d'autre part par une précontrainte initiale assure la fonction d'un moyen ressort et le cas échéant la fonction d'un moyen de rappel.

La figure 4 illustre un premier mode de réalisation d'un tel moyen élastique 23. Dans ce mode, une lame ressort 24 fixe le moyen d'entraînement 3 à l'arbre mené 2. Cette lame 24 est précontrainte dans un sens pour assurer la fonction du moyen ressort ou dans l'autre sens si elle doit assurer la fonction du moyen de rappel.

Un second mode de réalisation d'un tel moyen élastique 23 est, tel que l'illustre la figure 5, l'utilisation d'un élastomère 25. Cet élastomère 25 adhérisé entre l'arbre mené 2 et le moyen d'entraînement 3, assure d'une part la fixation de l'un à l'autre, en autorisant, par son élasticité, le mouvement circulaire de déploiement 12 du moyen d'entraînement 3, et d'autre part la fonction d'un moyen ressort, afin de plaquer le moyen d'entraînement 3 contre la cloche 8 ou le cas échéant, la fonction du moyen de rappel 25 rappelant le moyen d'entraînement 3 vers l'arbre 2.

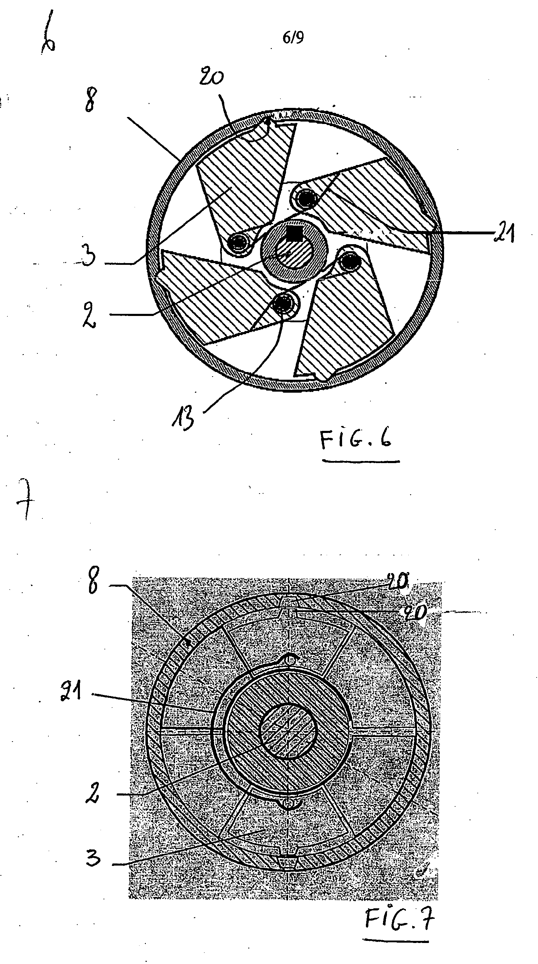

La figure 6 illustre un autre mode de réalisation de l'invention. Les surfaces en regard de la cloche 8 et du moyen 3 présentent, dans un plan transverse aux arbres 1 et 2, des profils complémentaires 20, qui s'emboîtent l'un dans l'autre et offrent une résistance à la rotation. Ceci permet la transmission d'un couple d'entraînement entre ces dites surfaces et par conséquent entre les deux arbres 1 et 2. Dans ce mode de réalisation, lesdites surfaces sont de révolution et présentent des normales radiales. Seule la friction s'oppose au mouvement relatif ces deux surfaces l'une par rapport à l'autre.

Dans une autre réalisation, les surfaces en regard de la cloche 8 et du moyen 3 présentent des portions complémentaires dont les normales ne sont pas radiales. Ces normales s'inclinent afin de ne plus être concourantes à l'axe des deux arbres 1 et 2. Ainsi, les profils 20 offrent une résistance au mouvement de rotation et permettent la transmission d'un couple d'entraînement. Comme pour le mode précédent de réalisation, le profil dans le sens longitudinal, parallèle à l'axe des deux arbres est quelconque. Il peut ainsi être cylindrique mais aussi conique ou quelconque. Le profil pertinent est le profil transverse dans une section dudit axe.

Il est possible de distinguer deux types de réalisation de ce second mode. Les profils 20 considérés peuvent être symétriques, relativement à un rayon, ainsi que l'illustre la figure 7. Ceci a pour caractéristique de transmettre indifféremment et identiquement un couple d'entraînement dans un sens de rotation ou dans l'autre.

Alternativement, ces profils 20 peuvent être dissymétriques relativement à un rayon, tel qu'illustré sur la figure 6, afin de permettre la transmission du couple d'entraînement dans un sens de rotation et de ne pas transmettre dans l'autre sens. Selon une réalisation avantageuse, l'entraînement est possible dans le sens inverse du sens de rotation 12 de l'arbre menant 1. Ainsi cet entraînement n'est effectif que, à l'instar de l'auto-blocage, lorsque le moteur 4 est en cours d'arrêt. Par contre en cas de blocage de l'outil 5, aucun couple significatif ne peut être transmis.

Afin de ne pas présenter des surfaces propices à l'entraînement trop importantes au démarrage, le moyen d'entraînement 3 est avantageusement rappelé vers l'arbre mené 2 par un moyen de rappel 21, comme l'illustrent les figures 6 et 7. Ce moyen de rappel 21 et les profils 20 en regard sont tels que, en position rappelée, les moyens d'entraînement 3 sont totalement escamotés afin que les surfaces 12, 13 en regard de la cloche 8 et des masselottes 3 ne puissent s'emboîter en aucune manière tant que le dispositif d'embrayage reste débrayé. L'action de ce moyen de rappel 21 est, au cours de la rotation, combattue par l'accélération centrifuge qui permet au moyen d'entraînement 3 de se déployer afin de venir s'emboîter. Un tel moyen d'entraînement 3 à crabot, peut être utilisé seul, à condition de ménager une friction résiduelle entre les parties extrêmes du moyen d'entraînement 3 et la surface de la cloche 8, permettant la mise en rotation initiale de l'arbre mené 2. Cette mise en rotation s'accompagnant d'une accélération centrifuge va progressivement déployer les moyens d'entraînement 3, jusqu'à provoquer l'emboîtement des profils 20 des surfaces en regard, qui produit un crabot. Dès que l'arbre mené 2 est bloqué, suite à un blocage de l'outil, le moyen d'entraînement 3 est rappelé vers l'arbre 2 sous l'action conjointe de l'arrêt de l'accélération centrifuge et du moyen de rappel 21.

Les moyens d'entraînement 3 se déploient circulairement vers la périphérie. Ceci est rendu possible, par exemple, par une rotation autour d'un arbre 13 autour duquel chaque moyen d'entraînement 3 est libre de tourner, comme illustré sur la figure 3. Cet arbre 13 est avantageusement parallèle à l'arbre mené 2, afin de faciliter le déploiement 12 sous l'effet de l'accélération centrifuge.

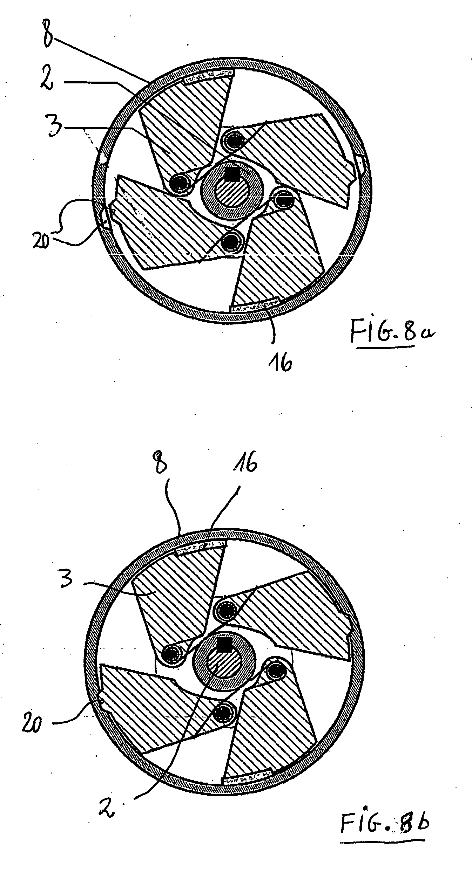

Les figures 8a et 8b illustrent un mode de réalisation combiné. On a décrit ci-dessus, un mode de réalisation selon l'invention comprenant des moyens d'entraînement 3 présentant une surface de révolution coopérant avec une surface de révolution de la cloche 8 par friction, ladite surface étant avantageusement appliquée contre la cloche 8 par un moyen ressort 14. On a également décrit un autre mode de réalisation selon l'invention comprenant des moyens d'entraînement 3 présentant une surface normale non radiale coopérant avec une surface normale non radiale de la cloche 8 par emboîtement, de profil 20 symétrique ou non, le moyen d'entraînement 3 étant rappelé vers l'arbre mené par un moyen de rappel 21. Ces deux modes de réalisation fonctionnent indépendamment l'un de l'autre. Il est cependant avantageux de les combiner en alternant l'un et l'autre type de moyen d'entraînement 3 et en les répartissant équitablement sur la périphérie de l'arbre mené 2. L'avantage d'un tel montage alternant est de combiner le moyen d'entraînement 3 à friction qui présente un comportement très progressif au démarrage avec le moyen d'entraînement 3 à profil 20 crabotant qui assure une très bonne transmission du couple. Il est ainsi possible de disposer de moyens de rappel plus efficaces afin de ne pas risquer de crabotage parasite. Le système ainsi combiné fonctionne avec les moyens d'entraînement 3 à friction qui assurent l'entraînement au démarrage, jusqu'à produire une accélération centrifuge assez importante pour s'opposer aux moyens de rappel 21 et assurer dans un deuxième temps le crabotage par un déploiement des moyens d'entraînement 3 de type crabot. La figure 8a illustre un tel exemple de combinaison en position arrêtée/débrayée. La figure 8b illustre ce même exemple de combinaison en position tournante/embrayée.

La présente invention s'applique à des machines outils ou des outillages portatifs de tout types. Ledit embrayage est interposé directement entre le moteur 4 et l'outil 5, afin d'interrompre l'entraînement dudit outil 5, lorsque ce dernier rencontre une résistance importante, correspondant, par exemple, à un blocage de l'outil dans la pièce travaillée.

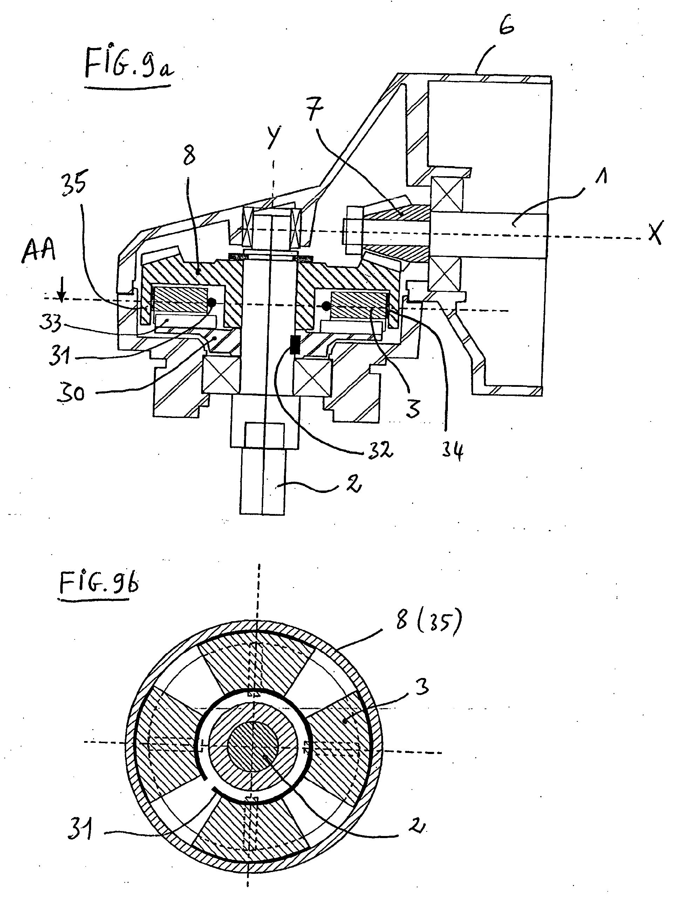

Sur la figure 9a, on a représenté un autre mode de réalisation des moyens d'entraînement constituant l'embrayage permettant d'entraîner l'arbre mené 2 par l'arbre menant 1. Dans ce mode de réalisation, chaque masselotte 3 est soumise à l'action d'un ressort 31 et est munie d'un patin 34 disposé parallèlement à l'arbre mené pour entrer en contact avec la jupe 35 de la cloche. Chaque masselotte 3 est montée sur un moyeu 30 par l'intermédiaire d'une denture 33 qui peut être droite, radiale ou courbe. Le moyeu 30 est lui-même fixé à l'arbre 2 par une clavette 32 pour être entraîné par celui-ci. La figure 9b montre la disposition spatiale des masselottes 3 par rapport à la jupe 35, le ressort 31 et l'arbre mené 2. C'est donc par un mouvement de translation que chaque masselotte 3 vient en contact avec la jupe 35 de la cloche et réaliser ainsi l'entraînement de l'outil.

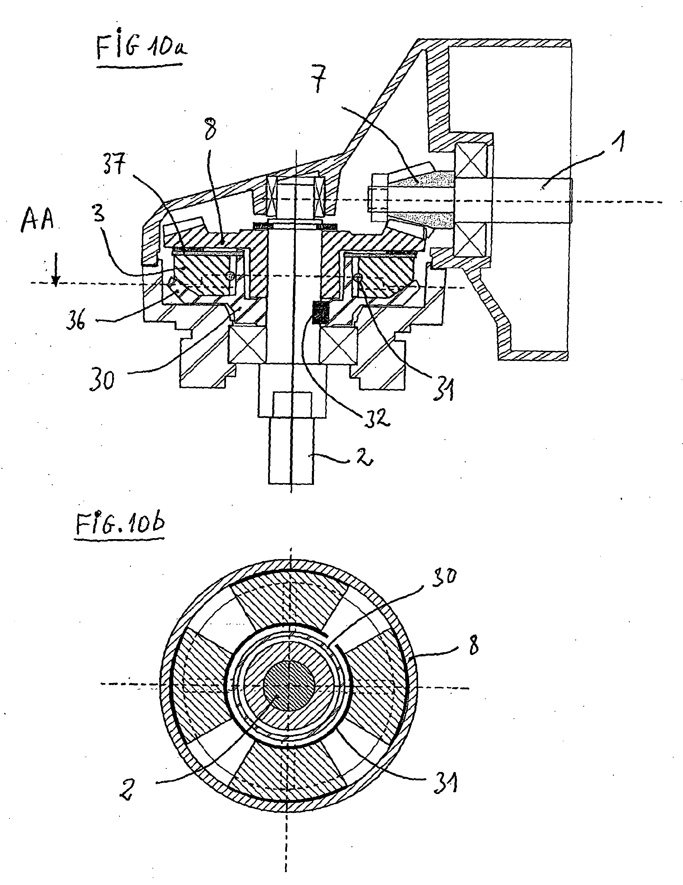

Sur la figure 10a, on a représenté une variante de réalisation dans laquelle chaque masselotte 3 est maintenue par une rampe 36 du moyeu 30 et comporte un patin 37 fixé perpendiculairement par rapport à l'arbre mené 2. Dans cette configuration, la cloche 8 ne comporte pas de jupe. La figure 10b montre la disposition spatiale des masselottes 3 par rapport à la cloche et au moyeu. C'est également par un mouvement de translation que chaque masselotte 3 vient en appui contre la cloche 8 pour assurer l'entraînement. Mais dans ce cas, sous l'effet de la force centrifuge, chaque masselotte 3 va parcourir la rampe 36 du moyeu pour venir progressivement en contact intime avec la cloche 8. Ce mode de réalisation permet d'utiliser un disque à titre de patin 37. Ce disque peut bien entendu être collé contre la cloche 8 et appliqué au niveau de sa partie médiane par le moyeu 30 comme représenté sur la figure 10a. Une configuration inverse peut être adoptée en fixant le disque patin sur la masselotte ou sur la cloche .

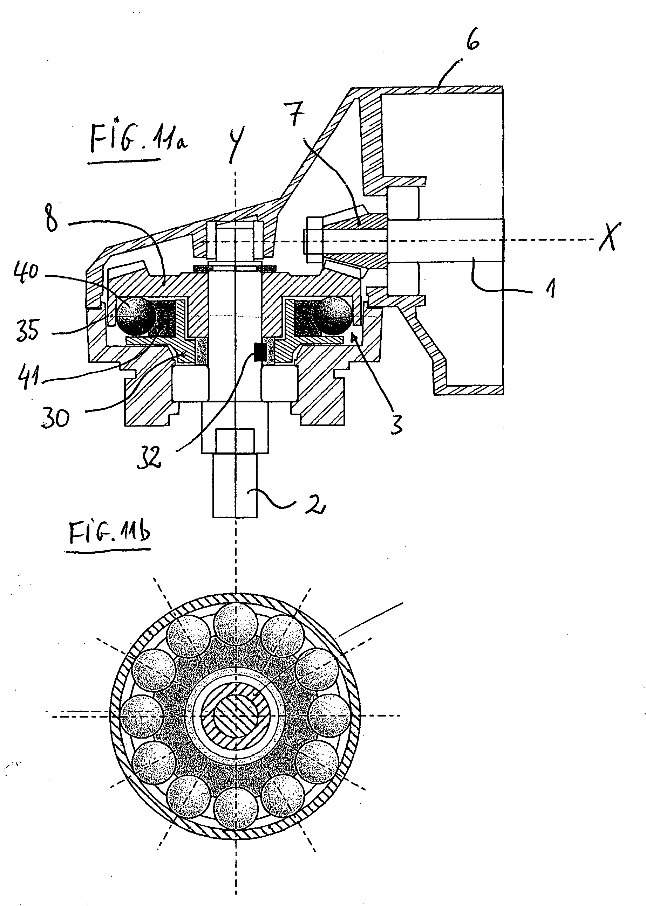

Sur la figure 11a, on a représenté une autre variante de réalisation selon laquelle la cloche 8 comporte une jupe 35 et le moyen d'entraînement 3 est intercalé entre le moyeu 30 et ladite jupe. Ce moyen 3 est constitué d'un élastomère 41 et d'un ensemble de billes 40. Cet élastomère joue le rôle du ressort et les billes celui du patin de friction. La figure 11b permet de visualiser la disposition des billes 40 en appui sur la jupe 35. Sous l'effet de la force centrifuge, l'élastomère va s'expandre pour plaquer les billes contre la juge 35 et assurer ainsi l'entraînement de l'axe mené 2.

Le fonctionnement des modes de réalisation conformes aux figures 9, 10 et 11 est identique à celui décrit en relation avec les figures 1 à 8 précédentes.

## Revendications

1. Machine portative sécurisée pour outillage motorisé comprenant un arbre (1) menant ou d'entrée accouplé et entraîné en rotation par un moteur rotatif (4), un arbre (2) mené ou dé sortie entraînant un outil (5) de coupe et disposé suivant une direction sensiblement perpendiculaire à l'arbre menant (1), un embrayage (3) et une cloche (8) solidaire de l'arbre mené (2) entraînée en rotation par un pignon de renvoi (7), ***caractérisé en ce que*** l'embrayage (3) est intégré dans la cloche (8) et disposé entre celle-ci et l'arbre mené (2), pour assurer un auto-débrayage en cas de blocage de l'arbre mené (2) et conférer une sécurité à l'utilisateur, ledit embrayage (3) étant constitué par des masselottes et solidaire de l'arbre mené (2), ledit embrayage étant appliqué selon un mouvement circulaire contre la cloche (8) par la force centrifuge des masselottes engendrée par la rotation de l'arbre mené (2) et par un moyen de rappel (14, 21, 23, 25, 31, 41) qui assure un frottement minimum pour permettre la mise en rotation initiale de l'outil.

2. Machine portative selon la revendication 1, **caractérisé en ce que** la transmission du couple d'entraînement est assurée par le contact par patin de friction entre l'embrayage (3) et la cloche (8).

3. Machine portative selon la revendication 2, **caractérisé en ce que** les surfaces de contact entre l'embrayage et la cloche sont recouvertes d'un matériau de friction (14).

4. Machine portative selon la revendication 1, **caractérisé en ce que** le moyen de rappel est un ressort hélicoïdal (14) ou une lame ressort (21, 23).

5. Machine portative selon la revendication 4 **Caractérisé en ce que** les lames ressort de rappel (21) s'appuient sur deux masselottes adjacentes.

6. Machine portative selon la revendication 4, **caractérisé en ce que** le moyen de rappel est un élastomère (25, 41) adhérisé entre l'arbre mené (2) et l'embrayage (3).

7. Machine portative selon la revendication 1, **caractérisé en ce que** l'embrayage combine des moyens d'entraînement (3) présentant une surface de révolution coopérant avec une surface de révolution de la cloche (8) par friction, ladite surface de révolution étant appliquée contre ladite surface de la cloche (8) par un moyen ressort (14), avec des moyens d'entraînement présentant une surface de normale non radiale coopérant avec une surface de normale non radiale de la cloche (8) par emboîtement, de profil symétrique ou non, le moyen d'entraînement (3) étant rappelé vers l'arbre mené (2) par un moyen de rappel, alternativement et équitablement répartis sur la périphérie de l'arbre mené.

8. Machine portative selon la revendication 7, **caractérisé en ce que** lesdites surfaces présentent deux profils complémentaires (20), de normale non radiale, tels que l'emboîtement des profils de ces deux surfaces permette la transmission du couple d'entraînement.

9. Machine portative selon l'une quelconque des revendications 2 à 8, **caractérisé en ce que** le patin de friction est constitué par un élastomère (41) et un ensemble de billes (40).

10. Machine portative selon l'une quelconque des revendications précédentes, **caractérisé en ce qu'**elle est constituée par des machines outils ou des outillages portatifs afin d'interrompre l'entraînement dudit outil (5) lorsque ce dernier rencontre une résistance correspondant, par exemple, à un blocage de l'outil dans la pièce travaillée.

## Claims

1. Secured portable machine for motorised tooling comprising a drive or input shaft (1) coupled with and driven in rotation by a rotary engine (4), a driven or output shaft (2) driving a cutting tool (5) and arranged in a direction substantially perpendicular to the drive shaft (1), a clutch (3) and a bell (8) integral with the driven shaft (2) driven in rotation by a main drive gear (7), ***wherein*** the clutch (3) is integrated into the bell (8) and is positioned between said bell and the driven shaft (2) to ensure automatic release should the driven shaft (2) become blocked and thereby ensuring the user's safety, said clutch (3) being constituted by counterweights and integral with the driven shaft (2), said clutch being applied in a circular motion against the bell (8) by the centrifugal force of the counterweights generated by the rotation of the driven shaft (2) and by return means (14, 21, 23, 25, 31, 41) that ensure minimal friction to enable the initial rotation of the tooling.

2. A portable machine according to Claim 1, wherein the transmission of the drive torque is ensured by the contact by friction pad between the clutch (3) and the bell (8).

3. A portable machine according to Claim 2, wherein the contact surfaces between the clutch and the bell are coated by a friction material (14).

4. A portable machine according to Claim 1, wherein the return means are formed by a helicoidal spring (14) or a leaf spring (21, 23).

5. A portable machine according to Claim 4, wherein the return springs (21) press on two adjacent counterweights.

6. A portable machine according to Claim 4, wherein the return means are formed of a bonded elastomer (25, 41) between the driven shaft (2) and the clutch (3).

7. A portable machine according to Claim 1, wherein the clutch combines drive means (3) having a surface of revolution that cooperates with the surface of revolution of the bell (8) by friction, said surface of revolution being applied against said surface of the bell (8) by spring means (14), with drive means having a surface of non-radial line of action cooperating with a surface of non-radial line of action of the bell (8) by nesting, symmetrical in profile or not, the drive means (3) being returned to the driven shaft (2) by return means, alternatively and evenly spaced over the periphery of the driven shaft.

8. A portable machine according to Claim 7, wherein said surfaces have two matching profiles (20), of non-radial line of action, such that the nesting of the profiles of these two surfaces enable the transmission of the drive torque.

9. A portable machine according to any one of Claims 2 to 8, wherein the friction pad is constituted by an elastomer (41) and a set of balls (40).

10. A portable machine according to any one of the above Claims, wherein it is constituted by portable machine tools or tooling to interrupt the driving of said tool (5) in the event of its encountering resistance corresponding, for example, to the tool becoming blocked in the part being machined.

## Patentansprüche

1. Tragbare, gesicherte Maschine für motorisiertes Werkzeug, umfassend eine angekuppelte Antriebs- oder Eingangswelle (1), die durch einen Drehmotor (4) in Drehung versetzt wird, eine Abtriebs- oder Ausgangswelle (2), die ein Schneidwerkzeug (5) antreibt und gemäß einer im wesentlichen senkrecht zur Antriebswelle (1) stehenden Richtung angeordnet ist, eine Kupplung (3) und eine Glocke (8), die fest mit der Abtriebswelle (2) verbunden ist, die von einem Zwischenritzel (7) in Drehung versetzt wird, ***dadurch gekennzeichnet, dass*** die Kupplung (3) in der Glocke (8) integriert und zwischen dieser und der Abtriebswelle (2) angeordnet ist, um ein automatisches Entkuppeln im Fall einer Blockierung der Abtriebswelle (2) zu gewährleisten und der Bedienperson eine Sicherheit zu verleihen, wobei die genannte Kupplung (3) von Fliehgewichten gebildet und fest mit der Abtriebswelle (2) verbunden ist, wobei die genannte Kupplung gemäß einer kreisförmigen Bewegung gegen die Glocke (8) durch die Zentrifugalkraft der Fliehgewichte gedrückt wird, die durch die Drehung der Abtriebswelle (2) erzeugt wird, und durch ein Rückhaltemittel (14, 21, 23, 25, 31, 41), das eine minimale Reibung gewährleistet, um das anfängliche Versetzen in Drehung des Werkzeuges zu gewährleisten.

2. Tragbare Maschine nach Anspruch 1, **dadurch gekennzeichnet, dass** die Übertragung des Antriebsmomentes durch den Reibschuhkontakt zwischen der Kupplung (3) und der Glocke (8) gewährleistet ist.

3. Tragbare Maschine nach Anspruch 2, **dadurch gekennzeichnet, dass** die Kontaktflächen zwischen der Kupplung und der Glocke mit einem Reibungsmaterial (14) beschichtet sind.

4. Tragbare Maschine nach Anspruch 1, **dadurch gekennzeichnet, dass** das Rückhaltemittel eine Schraubenfeder (14) oder ein Federblatt (21, 23) ist.

5. Tragbare Maschine nach Anspruch 4, **dadurch gekennzeichnet, dass** sich die Rückhalte-Federblätter (21) an zwei benachbarten Fliehgewichten abstützen.

6. Tragbare Maschine nach Anspruch 4, **dadurch gekennzeichnet, dass** das Rückhaltemittel ein Elastomer (25, 41) ist, das zwischen die Abtriebswelle (2) und die Kupplung (3) geklebt ist.

7. Tragbare Maschine nach Anspruch 1, **dadurch gekennzeichnet, dass** die Kupplung Antriebsmittel (3), die eine Rotationsfläche aufweisen, welche mit einer Rotationsfläche der Glocke (8) durch Reibung zusammenwirkt, wobei die genannte Rotationsfläche gegen die genannte Fläche der Glocke (8) durch ein Federmittel (14) gedrückt wird, mit Antriebsmitteln kombiniert, die eine nicht radiale Normalfläche aufweisen, welche mit einer nicht radialen Normalfläche der Glocke (8) durch Schachtelung mit symmetrischem Profil oder auch nicht zusammenwirkt, wobei das Antriebsmittel (3) zur Abtriebswelle (2) durch ein Rückhaltemittel rückgestellt wird, die alternierend und gleichmäßig über den Umfang der Abtriebswelle verteilt sind.

8. Tragbare Maschine nach Anspruch 7, **dadurch gekennzeichnet, dass** die genannten Flächen zwei komplementäre, nicht radiale Normalprofile (20) derartig aufweisen, dass die Schachtelung der Profile dieser beiden Flächen die Übertragung des Antriebsmomentes ermöglicht.

9. Tragbare Maschine nach irgendeinem der Ansprüche 2 bis 8, **dadurch gekennzeichnet, dass** der Reibschuh durch ein Elastomer (41) und eine Anzahl von Kugeln (40) gebildet wird.

10. Tragbare Maschine nach irgendeinem der vorhergehenden Ansprüche, **dadurch gekennzeichnet, dass** sie durch Maschinenwerkzeuge oder tragbare Werkzeuge gebildet wird, um den Antrieb des genannten Werkzeugs (5) zu unterbrechen, wenn dieses Letztere einem entsprechenden Widerstand begegnet, zum Beispiel einer Blockierung der Werkzeuges in dem bearbeiteten Stück.
